# EUROPÄISCHE PATENTSCHRIFT

(11) **EP 0 485 757 B1**
(45) Veröffentlichungstag und Bekanntmachung des Hinweises auf die Patenterteilung: **13.03.1996**
(21) Anmeldenummer: 91117719.4
(22) Anmeldetag: 17.10.1991
(51) Int. Cl.: F16B 7/02, E04F 11/18, A47K 17/02, A47K 3/00

(54) **Bausatz zum Herstellen von Griffen, Handläufen, Abschrankungen, Kleinmöbeln und dgl.**
Construction kit for manufacture of handles, hand vails, guard barriers, small furniture and the like
Jeu d'éléments pour la construction de poignées, mains courantes, barrières, petits meubles ou analogues

(30) Priorität: 31.10.1990 DE 9015002 U
(43) Veröffentlichungstag der Anmeldung: 20.05.1992
(73) Patentinhaber: EISEN- UND DRAHTWERK ERLAU AKTIENGESELLSCHAFT, D-73431 Aalen (DE)
(72) Erfinder: Speich, Helmut, W-7088 Hüttlingen (DE)
(74) Vertreter: Jackisch-Kohl, Anna-Katharina

(56) Entgegenhaltungen:
- DE-A- 3 436 990
- DE-A- 3 518 127
- DE-A- 3 717 155
- DE-U- 8 911 703
- FR-A- 1 280 317
- GB-A- 2 224 459

## Beschreibung

Die Erfindung betrifft eine Vorrichtung zur Montage eines Griffes und dergleichen nach dem Oberbegriff des Anspruches 1.

Bei einer bekannten Vorrichtung dieser Art (DE-A 37 17 155) kann ein Griff an einer Wand einer Badewanne befestigt werden. Der Griff bildet das Anschlußteil, das mit dem Kupplungsstück an der Wand befestigt wird. Die Spannschraube greift an der kegelförmigen Spannfläche des Kupplungsstückes an und zieht beim Einschrauben den Griff fest gegen die Badewannenwand. Mit dieser Vorrichtung ist es jedoch nicht möglich, gleichartige Anschlußteile unmittelbar miteinander zu verbinden.

Der Erfindung liegt die Aufgabe zugrunde, eine Vorrichtung dieser Art so auszubilden, daß auf konstruktiv einfache Weise gleiche bzw. gleichartige Anschlußteile zuverlässig fest miteinander verbunden werden können.

Diese Aufgabe wird bei der gattungsgemäßen Vorrichtung erfindungsgemäß mit den kennzeichnenden Merkmalen des Anspruches 1 gelöst.

Bei der erfindungsgemäßen Vorrichtung werden die beiden Anschlußteile durch die Spannteile in Richtung zueinander axial belastet, da die beiden Klemmflächen der beiden Ringnuten an den voneinander abgewandten Enden vorgesehen sind. Die Anschlußteile können beispielsweise als zylindrische Rohre ausgebildet sein, die gleichen Innen- und/oder Außendurchmesser aufweisen. Das Kupplungsstück kann bis auf die beiden Ringnuten durchgehend gleichen Querschnitt haben. Die Bauteile können so konstruktiv einfach und damit preisgünstig gefertigt werden. Die Montage dieser Teile zu einem Griff, einem Handlauf, einer Abschrankung und dergleichen ist problemlos und in kurzer Zeit möglich. Die Vorrichtung läßt sich auch wieder leicht demontieren und beispielsweise an einer anderen geeigneten Stelle erneut montieren.

Weitere Vorteile der Erfindung ergeben sich aus den weiteren Ansprüchen, der Beschreibung und den Zeichnungen.

Die Erfindung wird nachstehend anhand mehrerer in den Zeichnungen dargestellter Ausführungsbeispiele näher beschrieben. Es zeigt:
- Fig. 1: eine erfindungsgemäße Vorrichtung zur Montage eines Handlaufes, eines Griffes, eines Handtuchhalters sowie eines Gestelles für einen Hocker in einem Badezimmer in perspektivischer Darstellung,
- Fig. 2: die erfindungsgemäße Vorrichtung nach Fig. 1 in vergrößerter Darstellung und im Längsschnitt,
- Fig. 3: eine weitere Ausführungsform einer erfindungsgemäßen Vorrichtung im Längsschnitt und in einer gegenüber Fig. 2 verkleinerten Darstellung,
- Fig. 4: einen Schnitt längs der Linie IV-IV in Fig. 3,
- Fig. 5: eine weitere Ausführungsform einer erfindungsgemäßen Vorrichtung in einer Darstellung entsprechend Fig. 2.

Die erfindungsgemäße Vorrichtung kann beispielsweise zu einem längs einer Wand verlaufenden Handlauf 1, einem an der Wand befestigten Griff 2, einem Handtuchhalter 3 und zu einem Gestell 4

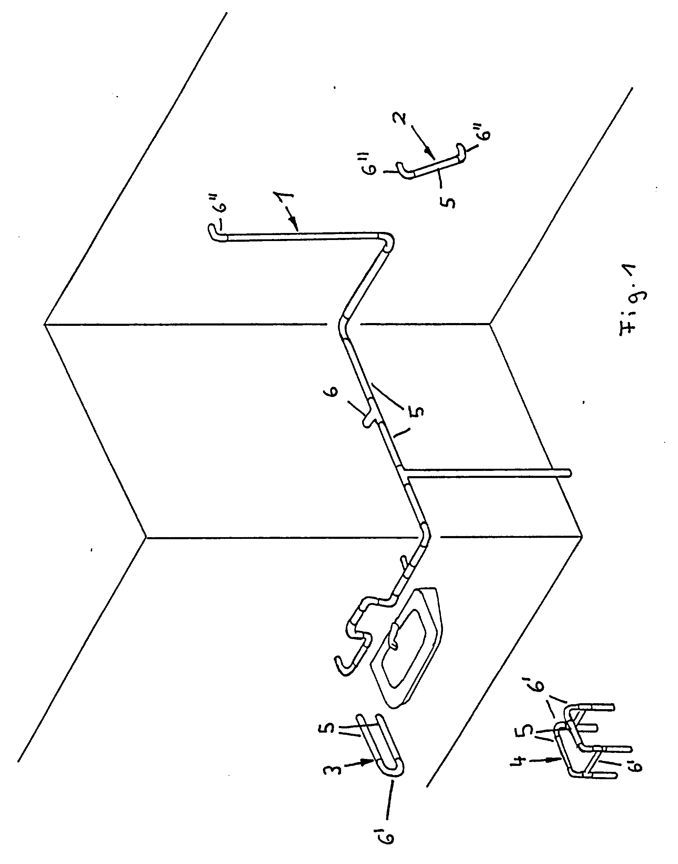

für einen Hocker mit ähnlichen Vorrichtungen verbunden werden. Gemäß Fig. 1 sind die Einrichtungsteile 1 bis 4 für ein Badezimmer vorgesehen. Die Vorrichtung eignet sich aber auch zur Herstellung von Treppengeländern, Abschrankungen von Bühnen und Kleinmöbeln, vorzugsweise aber für Haltegriffe, Stützgriffe und Handläufe für Duschen, Bäder, WC's, insbesondere als Sicherheitseinrichtungen vor allem für Behinderte.

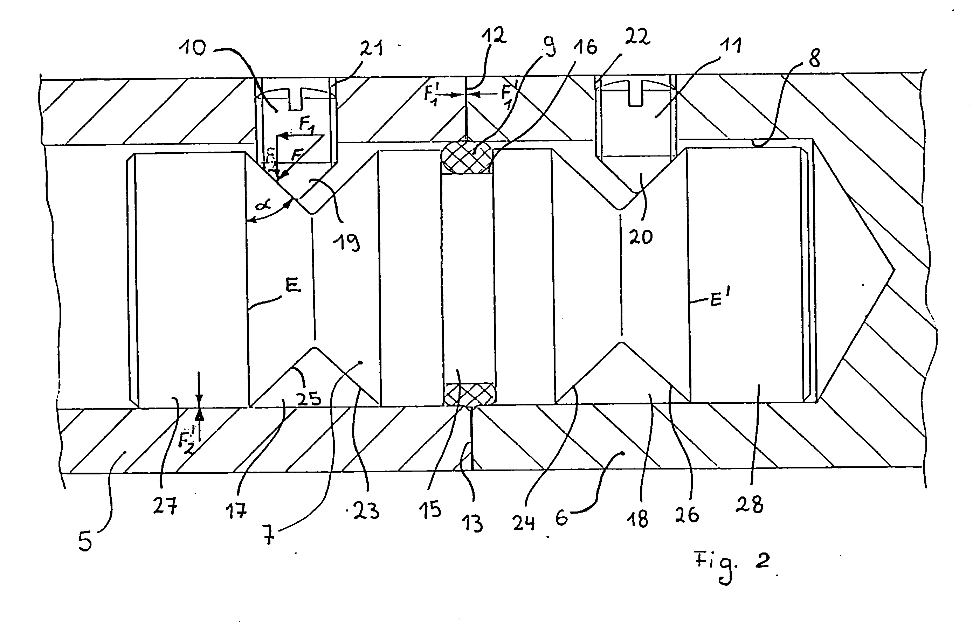

Fig. 2 zeigt ein erstes Ausführungsbeispiel einer erfindungsgemäßen Vorrichtung, die ein Rohrstück 5, ein stangenförmiges Anschlußteil 6 und ein Kupplungsstück 7 zum Verbinden der Teile 5 und 6 aufweist. Auf dem Kupplungsstück 7 sitzt eine Ringdichtung 9, beispielsweise ein O-Ring, die im Stoßbereich von Rohrstück 5 und Anschlußteil dichtend an ihnen anliegt. Zur Lagesicherung des Rohr- und Anschlußstückes 5, 6 sind durch Schrauben gebildete Spannteile 10 und 11 vorgesehen. Das Rohrstück und das Anschlußteil 6 haben gleichen Außendurchmesser und stoßen mit ihren freien Enden 12 und 13 stumpf aneinander. Zur Aufnahme des Kupplungsstückes 7 weist das Anschlußteil 6 eine Sacklochbohrung 8 auf.

Das Kupplungsstück 7 hat vorzugsweise in halber Länge eine Ringnut 15 zur Aufnahme der Ringdichtung 9. Sie liegt unter elastischer Verformung an der Innenwandung des Rohrstückes 5 und des Anschlußteiles 6 an und verhindert das Eindringen von Feuchtigkeit, Schmutz und dgl. durch den Stoßbereich zwischen Rohrstück 5 und Anschlußteil 6.

Das Kupplungsstück 7 hat zwei im Längsschnitt unter einem spitzen Winkel α zu jeweils einer Radialebene E, E' liegende Klemmflächen 25 und 26. Sie sind im Ausführungsbeispiel nahe den beiden Enden des Kupplungsstückes 7 vorgesehen und entgegengesetzt zueinander geneigt. Die Klemmflächen 25 und 26 erstrecken sich bis zur Mantelfläche des kreisförmigen Querschnitt aufweisenden Kupplungsstückes 7. Die beiden Klemmflächen 25, 26 erstrecken sich von der Mantelfläche des Kupplungsstückes 7 aus schräg in Richtung zueinander. Vorteilhaft schließen die Klemmflächen 25, 26 jeweils den gleichen spitzen Winkel α zur jeweiligen Radialebene E bzw. E' ein.

Mit den Klemmflächen 25, 26 wirken die Spannteile 10 und 11 zusammen, die an ihren freien Enden jeweils eine Spannfläche 19 bzw. 20 haben, mit der sie in der Montagelage an den Klemmflächen 25 und 26 anliegen. Die Spannteile 10, 11 sind bevorzugt Spannschrauben, die in Gewindebohrungen 21 und 22 im Rohrstück 5 und im Anschlußteil geschraubt sind. Die Spannflächen 19, 20 sind in diesem Falle Kegelflächen, die in jeder Drehlage der Spannschrauben 10, 11 an den zugehörigen Klemmflächen 25, 26 zur Anlage kommen können. Die Wandungen von Rohrstück 5 und vom Anschlußteil 6 können verhältnismäßig dünn sein, beispielsweise nur etwa 2-3 mm betragen. Die entsprechend kleinen Spannschrauben 10, 11 finden dennoch ausreichend Halt im Rohrstück 5 bzw. im Anschlußteil 6. Damit das Rohrstück 5 und/oder das Anschlußteil 6 in jeder beliebigen Lage zueinander mit dem Kupplungsstück 7 verbunden werden können, sind die Klemmflächen 25, 26 jeweils als Kegelflächen ausgebildet, so daß die Spannschrauben 10, 11 in jeder Lage des Rohrstückes 5 bzw. des Anschlußteiles 6 gegen die Klemmflächen 25, 26 geschraubt werden können. Bei der in Fig. 2 dargestellten Spannstellung liegen die Spannschrauben 10, 11 mit ihren Spannflächen 19, 20 mit Linienberührung an den Klemmflächen 25, 26 an. Der Kegelwinkel der Spannflächen 19, 20 der Spannschrauben 10, 11 entspricht dem Kegelwinkel α der Klemmfläche 25 bzw. 26. Die Spannschrauben 10, 11 liegen dadurch einwandfrei mit ihren Spannflächen 19, 20 auf den Klemmflächen 25, 26.

Die beiden Klemmflächen 25, 26 bilden die voneinander abgewandten Seiten jeweils einer Ringnut 17 und 18, deren einander zugewandten Seiten jeweils durch eine Kegelfläche 23 und 24 gebildet wird. Die beiden Kegelflächen 23, 25 und 24, 26 jeder Ringnut 17, 18 erstrecken sich bis zur Mantelfläche des Kupplungsstückes 7 und gehen mit Abstand von der Achse des Kupplungsstückes ineinander über. Die Ringnuten 17, 18 haben infolge der beschriebenen Ausbildung im Schnitt gemäß Fig. 2 jeweils Dreieckform. Vorzugsweise haben die Kegelflächen 23, 25 und 24, 26 jeder Ringnut 17, 18 den gleichen Kegelwinkel α .

Anstelle der zweiten Kegelfläche 23 und 24 kann jede Ringnut 17, 18 beispielsweise einen zur Achse des Kupplungsstückes koaxialen Boden und eine senkrecht an ihn anschließende Seitenwand haben. Wesentlich ist nur, daß die Spannschrauben 10, 11 beim Spannvorgang ausschließlich an den Klemmflächen 25 und 26 zur Anlage kommen.

Beim Einschrauben werden die Spannschrauben 10, 11 fest gegen die Klemmflächen 25, 26 gedrückt. Infolge des Kegelwinkels tritt dabei die resultierende Kraft F auf. Bei diesem Spannvorgang werden das Rohrstück 5 und das Anschlußteil 6 infolge der gegensinnig geneigten Klemmflächen 25, 26 jeweils mit einer Kraft F₁ gegeneinander gedrückt. Dadurch wird ein fester Verbund zwischen dem Rohrstück 5, dem Anschlußteil 6 und dem Kupplungsstück 7 erreicht. Das Kupplungsstück 7 wird durch die Spannschrauben 10, 11 beim Spann- und Kupplungsvorgang gegen den den Spannschrauben diagonal gegenüberliegenden Bereich des Rohrstückes 5 und des Anschlußteiles 6 gedrückt. Durch die Wahl des Kegelwinkels der Klemmflächen 25 und 26 kann die Höhe der Kraft F₁' verändert werden. Die Spannschrauben 10, 11 liegen versenkt im Rohrstück 5 und Anschlußteil 6.

Mit der Dichtung 9 kann der Stoß zwischen dem Rohstück 5 und dem Anschlußteil 6 abgedichtet werden, was besonders dann erforderlich ist, wenn die Vorrichtung bzw. die daraus hergestellten Handläufe, Griffe und dgl. in Feuchträumen oder im Freien eingesetzt werden. Die in Fig. 2 dargestellte Vorrichtung ist mit anderen solchen Vorrichtungen zum Handlauf 1, dem Haltegriff 2 und dem Stützgriff sowie dem Hockergestell 4 gemäß Fig. 1 verbunden. Die Rohrstücke 5 sind beim Handlauf 1 über die Anschlußstücke 6 miteinander verbunden, wobei die Anschlußstücke durch T-Stücke gebildet sind. Anstelle der T-Stücke können aber auch Winkelstücke 6' oder Endstücke 6'' als Anschlußstücke vorgesehen sein. Entsprechend besteht der Haltegriff 2 aus dem Rohrstück 5 und den Endstücken 6''. Der Handtuchhalter 3 besteht hingegen aus zwei Rohrstücken 5, deren eine Enden über ein 180°-Bogenstück 6' miteinander verbunden sind. Beim Hockergestell 4 sind wiederum Rohrstücke 5 und Winkelstücke 6' sowie T-Stücke 6' als Querverbindungen vorgesehen.

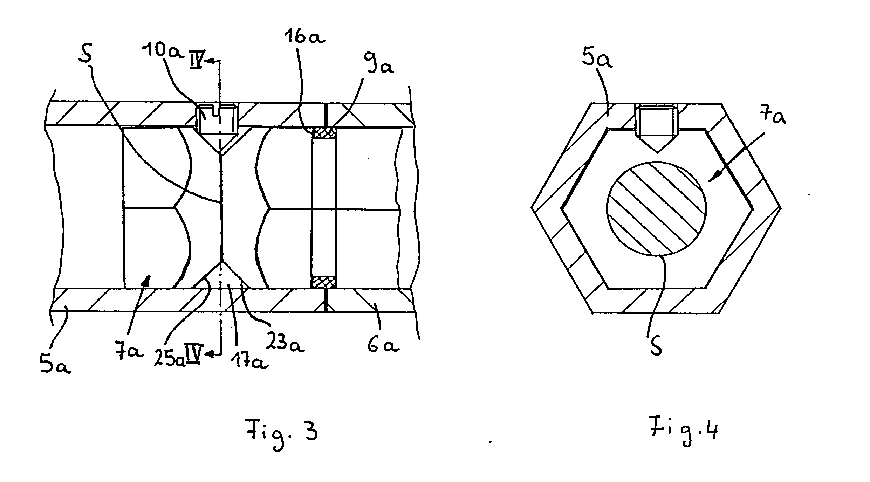

Die Ausführungsform nach den Fig. 3 und 4 unterscheidet sich von der Ausführungsform nach Fig. 2 dadurch, daß das Kupplungsstück 7a, das Rohrstück 5a und das Anschlußteil 6a jeweils sechseckigen Querschnitt haben. Dadurch können das Rohrstück und das Anschlußteil im Gegensatz zum vorigen Ausführungsbeispiel nicht stufenlos, sondern nur stufenweise um ihre jeweiligen Achsen verdreht miteinander verbunden werden. Das Kupplungsstück 7a ist entsprechend dem Kupplungsstück 7 gemäß Fig. 2 symmetrisch ausgebildet. In den Fig. 3 und 4 ist nur die eine Ringnut 17a für das Spannteil 10a und die Ringnut 16a für die Ringdichtung 9a dargestellt. Die Ringnut 17a wird von den beiden Kegelflächen 23a und 25a begrenzt, die gleich ausgebildet sind wie bei der vorherigen Ausführungsform. Die von den beiden Kegelflächen 23a, 25a gebildete Schnittlinie S ist wiederum ein Kreis (Fig. 4), dessen Mittelpunkt auf der Achse des Kupplungsstückes 7a liegt. Das Rohrstück 5a und das Anschlußstück 6a werden in gleicher Weise über das Kupplungsstück 7a verbunden, wie es anhand der vorigen Ausführungsform beschrieben worden ist.

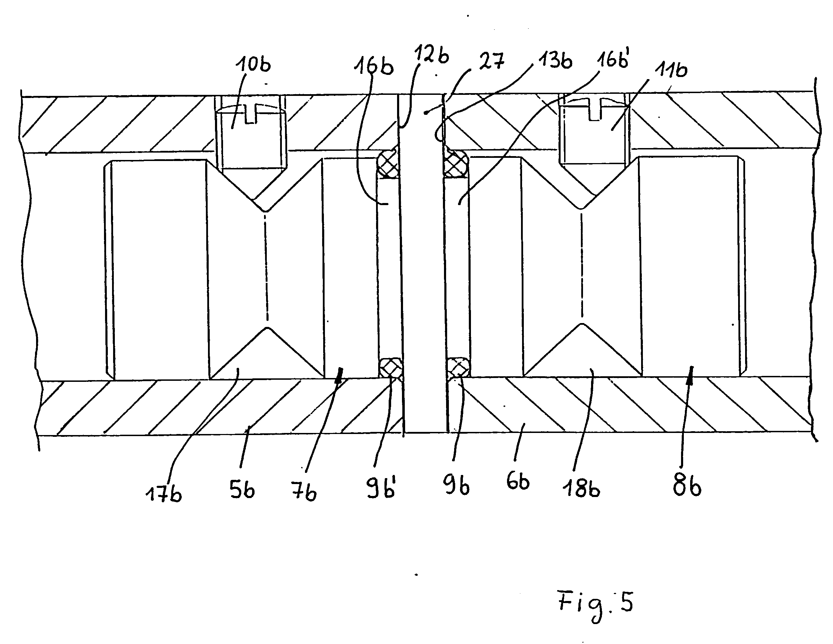

Bei der Ausführungsform nach Fig. 5 weist das Kupplungsstück 8b in halber Länge einen radial überstehenden Ringbund 27 auf, an dem die einander zugewandten Enden 12b und 13b des Rohrstückes 5b und des Anschlußteiles 6b in der Montagelage anliegen. Durch den Ringbund 27 wird die Ringnut 16b in zwei Ringnutabschnitte 16b' und 16b'' unterteilt, die jeweils eine Ringdichtung 9b und 9b' aufnehmen. Die Umfangsfläche des Ringbundes 27 bildet mit den Mantelflächen des Rohrstückes 5b und des Anschlußstückes 6b eine stetige, ununterbrochene Außenfläche. Zum Verspannen des Rohr- und Anschlußstückes 5b, 6b sind die Spannschrauben 10b, 11b vorgesehen, mit denen sie gegen den Ringbund 27 gedrückt werden. Das Kupplungsstück 7b entspricht im übrigen der Ausführungsform nach Fig. 2. Selbstverständlich können das Rohr- und das Anschlußstück 5b und 6b eckigen Querschnitt entsprechend den Fig. 3 und 4 haben. In diesem Fall hat das Kupplungsstück 7b im übrigen eine Ausbildung gemäß den Fig. 3 und 4.

Mit den beschriebenen Vorrichtungen können Sicherheitshaltegriffe, Geländer, Abschrankungen und dgl. einfach und genau an die Bedürfnisse beispielsweise von behinderten Personen oder örtliche Gegebenheiten angepaßt werden. Die beschriebenen Vorrichtungen können vor Ort dem Bedarf entsprechend zu dem Geländer, Griff, Kleinmöbel oder dgl. mit gleichen oder ähnlichen Vorrichtungen verbunden werden. Hierzu müssen lediglich die Kupplungsstücke in das betreffende Rohrstück gesteckt und die Spannteile zur Verbindung mit dem jeweiligen Anschlußteil, einer Wand, einem Boden, einer Platte und dgl. betätigt werden. Die Vorrichtungen lassen sich einfach und schnell montieren und demontieren und können große Stützkräfte ohne weiteres aufnehmen. Vorteilhaft ist außerdem, daß die so gebildeten Griffe, Geländer oder dgl. keine überstehenden Verbindungsteile aufweisen, da die Spannschrauben versenkt im Rohrstück oder auch im Anschlußstück untergebracht sind. Darüber hinaus bestehen die Vorrichtungen aus wenigen Einzelteilen, so daß insbesondere dadurch die Montage der entsprechenden Teile einfach durchgeführt werden kann. Haben die Rohrstücke und/oder die Anschlußteile bzw. -stücke kreisförmigen Querschnitt, dann können sie gegeneinander stufenlos verstellt werden, so daß mit der Vorrichtung die unterschiedlichsten Formen zusammengesetzt werden können. Da die Ringnuten die als Kegelflächen ausgebildeten Klemmflächen haben, ist die beschriebene Vorspannung in jeder Lage der Rohrstücke und/oder Anschlußteile problemlos möglich.

Bei allen Ausführungsformen ist das Kupplungsstück so ausgebildet, daß die Spannteile nicht auf dem Grund der Ringnuten aufsitzen und das Kupplungsstück nicht am Boden der Sacklochbohrung (Fig. 2 und 3) anliegt. Dadurch ist gewährleistet, daß die Rohrstücke und die Anschlußteile einwandfrei verspannt werden können.

## Patentansprüche

1. Vorrichtung zur Montage eines Griffes und dergleichen, mit einem als Rohrstück ausgebildeten Anschlußteil (5, 5a, 5b), in dem ein Kupplungsstück (7, 7a, 7b) angeordnet ist, das in seiner Mantelfläche eine umlaufende Ringnut (17, 17a, 17b) aufweist, die an wenigstens einer Seite von einer kegelförmigen Klemmfläche (23, 23a) begrenzt ist, die sich von der Mantelfläche aus unter dem Kegelwinkel (α) in Richtung auf das anzuschließende Anschlußteil erstreckt, und mit einem als Spannschraube ausgebildeten Spannteil (10, 10a, 10b), das im Anschlußteil (5, 5a, 5b) radial verstellbar gelagert ist und mit einer Spannfläche (19) an der Klemmfläche (23, 23a) anliegt, wobei das Kupplungsstück (7, 7a, 7b) in ein weiteres Anschlußteil (6, 6a, 6b) ragt,
dadurch gekennzeichnet, daß der überstehende Teil des Kupplungsstückes (7, 7a, 7b) eine weitere umlaufende Ringnut (18, 18b) aufweist, die an ihrem von der anderen Ringnut (17, 17a, 17b) abgewandten Ende eine weitere kegelförmige Klemmfläche (26) aufweist, die sich von der Mantelfläche des Kupplungsstückes (7, 7a, 7b) aus unter dem Kegelwinkel (α) in Richtung auf das andere Anschlußteil (5, 5a, 5b) erstreckt, und daß im weiteren Anschlußteil (6, 6a, 6b) wenigstens ein weiteres, als Spannschraube ausgebildetes Spannteil (11) radial verstellbar gelagert ist, das mit einer weiteren Spannfläche (20) an der Klemmfläche (26) anliegt.

2. Vorrichtung nach Anspruch 1,
dadurch gekennzeichnet, daß die Ringnuten (17, 17a, 17b; 18, 18b) V-förmigen Querschnitt haben.

3. Vorrichtung nach Anspruch 1 oder 2,
dadurch gekennzeichnet, daß die Spannfläche (19, 20) eine Kegelfläche am freien Ende des Spannteiles (10, 10a, 10b, 11) ist.

4. Vorrichtung nach einem der Ansprüche 1 bis 3,
dadurch gekennzeichnet, daß die Ringnut (17, 17a, 17b; 18, 18b) kreisförmigen Umriß hat.

5. Vorrichtung nach einem der Ansprüche 1 bis 3,
dadurch gekennzeichnet, daß die Ringnut (17, 17a, 17b; 18, 18b) eckigen, vorzugsweise sechseckigen Umriß hat.

6. Vorrichtung nach einem der Ansprüche 1 bis 5,
dadurch gekennzeichnet, daß die Anschlußteile (5, 5a, 5b; 6, 6a, 6b) und das Kupplungsstück (7, 7a, 7b) kreisförmigen Querschnitt haben.

7. Vorrichtung nach einem der Ansprüche 1 bis 5,
dadurch gekennzeichnet, daß die Anschlußteile (5, 5a, 5b; 6, 6a, 6b) und das Kupplungsstück (7, 7a, 7b) eckigen, vorzugsweise sechseckigen Querschnitt haben.

8. Vorrichtung nach einem der Ansprüche 1 bis 7,
dadurch gekennzeichnet, daß das Kupplungsstück (7, 7a, 7b) mindestens eine dritte Ringnut (16, 16a, 16b) zur Aufnahme einer Ringdichtung (9, 9a, 9b) aufweist.

9. Vorrichtung nach einem der Ansprüche 1 bis 8,
dadurch gekennzeichnet, daß das Kupplungsstück (7, 7a, 7b) symmetrisch zu seiner Quermittelebene ausgebildet ist.

10. Vorrichtung nach einem der Ansprüche 1 bis 9,
dadurch gekennzeichnet, daß das Kupplungsstück (7b) in halber Länge einen radialen Ringbund (27) aufweist, und daß vorzugsweise auf beiden Seiten des Ringbundes (27) jeweils eine Dichtung (9b, 9b') vorgesehen ist.

11. Vorrichtung nach Anspruch 10,
dadurch gekennzeichnet, daß die Anschlußteile (5b, 6b) unter axialer, durch die Spannteile (10b, 11) erzeugter Kraft mit ihren einander zugewandten Enden (12b, 13b) am Ringbund (27) anliegen.

12. Vorrichtung nach Anspruch 10 oder 11,
dadurch gekennzeichnet, daß die Anschlußteile (5b, 6b) und der Ringbund (27) gleichen Umriß haben.

13. Vorrichtung nach einem der Ansprüche 10 bis 12,
dadurch gekennzeichnet, daß der Ringbund (27) die dritte Ringnut (16b) in zwei Ringnutabschnitte (16b, 16b') unterteilt.

## Claims

1. A device for mounting a handle and the like, comprising a connecting part (5, 5a, 5b) which is formed as a tubular member and in which is arranged a coupling member (7, 7a, 7b), the outer surface thereof having a circumferential annular groove (17, 17a, 17b) delimited on at least one side by a tapered clamping surface (23, 23a) extending at a cone angle (α) from the outer surface towards the connecting part to be fitted, and comprising a clamping part (10, 10a, 10b) which is formed as a clamping screw, is radially adjustably mounted in the connecting part (5, 5a, 5b) and a clamping surface (19) of which rests against the tapered clamping surface (23, 23a), wherein the coupling member (7, 7a, 7b) projects into a further connecting part (6, 6a, 6b), characterised in that the projecting part of the coupling member (7, 7a, 7b) has a further circumferential annular groove (18, 18b) having, at its end facing away from the other annular groove (17, 17a, 17b), a further tapered clamping surface (26) extending at a cone angle (α) from the outer surface of the coupling member (7, 7a, 7b) towards the other connecting part (5, 5a, 5b), and in that at least one further clamping part (11), formed as a clamping screw, is radially adjustably mounted in the further connecting part (6, 6a, 6b) and has a further clamping surface (20) resting against the further tapered clamping surface (26).

2. A device according to claim 1, characterised in that the annular grooves (17, 17a, 17b; 18, 18b) have a V-shaped cross-section.

3. A device according to claim 1 or 2, characterised in that the clamping surface (19, 20) of the clamping part is a conical surface at the free end of the clamping part (10, 10a, 10b; 11).

4. A device according to one of claims 1 to 3, characterised in that the annular groove (17, 17a, 17b; 18, 18b) has a circular contour.

5. A device according to one of claims 1 to 3, characterised in that the annular groove (17, 17a, 17b; 18, 18b) has a polygonal, preferably hexagonal contour.

6. A device according to one of claims 1 to 5, characterised in that the connecting parts (5, 5a, 5b; 6, 6a, 6b) and the coupling member (7, 7a, 7b) have a circular cross-section.

7. A device according to one of claims 1 to 5, characterised in that the connecting parts (5, 5a, 5b; 6, 6a, 6b) and the coupling member (7, 7a, 7b) have a polygonal, preferably hexagonal cross-section.

8. A device according to one of claims 1 to 7, characterised in that the coupling member (7, 7a, 7b) has at least one third annular groove (16, 16a, 16b) for receiving a ring seal (9, 9a, 9b).

9. A device according to one of claims 1 to 8, characterised in that the coupling member (7, 7a, 7b) is formed symmetrically in relation to its transverse centre plane.

10. A device according to one of claims 1 to 9, characterised in that the coupling member (7b) has a radial collar (27) halfway along its length, and in that a seal (9b, 9b') is preferably provided on both sides of the collar (27).

11. A device according to claim 10, characterised in that the facing ends (12b, 13b) of the connecting parts (5b, 6b) rest against the collar (27) under axial force generated by the clamping parts (10b, 11).

12. A device according to claim 10 or 11, characterised in that the connecting parts (5b, 6b) and the collar (27) have the same contour.

13. A device according to one of claims 10 to 12, characterised in that the collar (27) divides the third annular groove (16b) into two annular groove portions (16b, 16b').

## Revendications

1. Dispositif pour le montage d'une poignée ou analogue, comprenant un élément de raccordement (5, 5a, 5b) constitué par un tronçon de tube, dans lequel est agencé un raccord (7, 7a, 7b) qui présente dans sa surface latérale une gorge annulaire périphérique (17, 17a, 17b) qui est limitée, au moins d'un côté, par une surface de coincement conique (23, 23a) qui s'étend à partir de la surface latérale et en direction de l'élément de raccordement à raccorder sous un angle de cône (α), et un élément de serrage (10, 10a, 10b) constitué par une vis de serrage, qui est monté réglable radialement dans l'élément de raccordement (5, 5a, 5b) et est en appui contre la surface de coincement (23, 23a) par une surface de serrage (19), le raccord (7, 7a, 7b) étant engagé dans un autre élément de raccordement (6, 6a, 6b),
caractérisé en ce que la partie débordante du raccord (7, 7a, 7b) présente une autre gorge annulaire périphérique (18, 18b) qui présente elle-même, à son extrémité qui est la plus éloignée de l'autre gorge annulaire (17, 17a, 17b), une autre surface de coincement conique (26) qui s'étend à partir de la surface latérale du raccord (7, 7a, 7b) en direction de l'autre élément de raccordement (5, 5a, 5b) sous l'angle de cône (α) et en ce que, dans l'autre élément de raccordement (6, 6a, 6b), est monté réglable radialement un autre élément de serrage (11) constitué par une vis de serrage, qui est en appui contre la surface de coincement (26) par une autre surface de serrage (20).

2. Dispositif selon la revendication 1,
caractérisé en ce que les gorges annulaires (17, 17a, 17b ; 18, 18b) ont une section en V.

3. Dispositif selon la revendication 1 ou 2,
caractérisé en ce que la surface de serrage (19, 20) est une surface conique présente à l'extrémité libre de l'élément de serrage (10, 10a, 10b ; 11).

4. Dispositif selon une des revendications 1 à 3,
caractérisé en ce que la gorge annulaire (17, 17a , 17b ; 18, 18b) a un contour circulaire.

5. Dispositif selon une des revendications 1 à 3,
caractérisé en ce que la gorge annulaire (17, 17a, 17b ; 18, 18b) a un contour anguleux, de préférence hexagonal.

6. Dispositif selon une des revendications 1 à 5,
caractérisé en ce que les éléments de raccordement (5, 5a, 5b.; 6, 6a, 6b) et le raccord (7, 7a, 7b) ont une section circulaire.

7. Dispositif selon une des revendications 1 à 5,
caractérisé en ce que les éléments de raccordement (5, 5a, 5b.; 6, 6a, 6b) et le raccord (7, 7a, 7b) ont une section anguleuse, de préférence hexagonale.

8. Dispositif selon une des revendications 1 à 7,
caractérisé en ce que le raccord (7, 7a, 7b) présente au moins une troisième gorge annulaire (16, 16a, 16b) pour recevoir une garniture d'étanchéité annulaire (9, 9a, 9b).

9. Dispositif selon une des revendications 1 à 8,
caractérisé en ce que le raccord (7, 7a, 7b) est de configuration symétrique par rapport à son plan médian transversal.

10. Dispositif selon une des revendications 1 à 9,
caractérisé en ce que le raccord (7b) présente une embase annulaire radiale (27) au milieu de sa longueur et en ce qu'il est prévu une garniture d'étanchéité (9b, 9b') de préférence sur chacun des deux côtés de l'embase annulaire (27).

11. Dispositif selon la revendication 10,
caractérisé en ce que les éléments de raccordement (5b, 6b) sont en appui contre l'embase annulaire (27) par leurs extrémités (12b, 13b) qui se font mutuellement face, sous une force axiale produite par les éléments de serrage (10b, 11).

12. Dispositif selon la revendication 10 ou 11,
caractérisé en ce que les éléments de raccordement (5b, 6b) et l'embase annulaire (27) ont le même contour.

13. Dispositif selon une des revendications 10 à 12,
caractérisé en ce que l'embase annulaire (27) divise la troisième gorge annulaire (16b) en deux segments de gorge annulaire (16b, 16b').
